# FASCICULE DE BREVET EUROPEEN

(11) **EP 4 147 868 B1**
(45) Date de publication et mention de la délivrance du brevet: **11.10.2023**
(21) Numéro de dépôt: 22193949.9
(22) Date de dépôt: 05.09.2022
(51) Int. Cl.: B32B 3/26, B32B 7/023, B32B 7/12, B32B 9/00, B32B 9/04, B32B 17/10, B32B 21/08, B32B 27/06, B32B 27/36

(54) **PIÈCE DE GARNITURE INTÉRIEURE AUTOMOBILE COMPORTANT UNE COUCHE D HABILLAGE ET SON PROCÉDÉ DE FABRICATION**
INNENVERKLEIDUNGSTEIL FÜR KRAFTFAHRZEUG MIT EINER VERKLEIDUNGSSCHICHT UND SEIN HERSTELLUNGSVERFAHREN
MOTOR VEHICLE INNER LINING PART COMPRISING A COVERING LAYER AND METHOD FOR MANUFACTURING SAME

(30) Priorité: 10.09.2021 FR 2109517
(43) Date de publication de la demande: 15.03.2023
(73) Titulaire: SMRC Automotive Holdings Netherlands B.V., 1101 BA Amsterdam (NL)
(72) Inventeur: CHOQUET, Alain, 59260 HELLEMMES-LILLE (FR)
(74) Mandataire: Cabinet Nuss

(56) Documents cités:
- EP-A1- 3 587 103
- EP-A2- 2 060 443
- WO-A1-2020/233979
- US-A1- 2002 101 738
- US-A1- 2019 275 934

## Description

La présente invention concerne le domaine du revêtement de surface de pièces structurelles, notamment l'habillage de pièces de garniture intérieure de véhicule automobile, comprenant un substrat ou corps support structurant, et a pour objets une telle pièce de garniture intérieure de véhicule et son procédé de fabrication.

La présente invention s'inscrit notamment, mais non limitativement, dans la tendance actuelle visant, dans le cadre de l'équipement intérieur des véhicules, à habiller/décorer des surfaces avec des feuilles ou fines couches de matériaux naturels et à réaliser des effets de lumière par rétro-éclairage, à travers un complexe formé par un empilage de couches, intégrant en particulier une couche en un matériau naturel plus ou moins translucide.

Ces effets lumineux ont notamment pour but de faire apparaitre des décorations particulières, des messages, des logos et/ou des pictogrammes, de créer des halos lumineux, de réaliser un éclairage diffus ou encore de provoquer l'apparition de certaines commandes tactiles ou inductives à activer par l'utilisateur: ces effets lumineux variés étant visibles uniquement lorsque la source de lumière sous la pièce ou dans la pièce est activée et émet.

Ce concept plait aux utilisateurs et est attractif car il permet de présenter de larges surfaces à l'intérieur des véhicules dénuées de boutons et commandes, et aussi de provoquer des effets de surprise à l'apparition de l'effet lumineux, à un endroit neutre et judicieusement choisi, ne laissant pas présager un tel effet, également appelé « secret till lit effect » (effet « secret jusqu'à éclairement »).

Par le document FR 3 096 301, on connait déjà une couche composite d'habillage destinée à recouvrir un substrat rigide, en particulier pour constituer une pièce de garniture intérieure de véhicule automobile, ladite couche composite comprenant une couche support en un textile tissé ou non-tissé, sur laquelle est rapportée une fine couche de matériau naturel organique ou minéral, la face apparente de cette dernière étant elle-même recouverte d'une couche de primaire d'adhésion et d'une couche de vernis, formant la couche superficielle. Ces couches élémentaires précitées qui forment par superposition la couche composite présentent toutes des matériaux constitutifs et des épaisseurs autorisant une transmission lumineuse plus ou moins efficiente à travers ladite couche composite. Un procédé d'habillage de pièces intérieures par une telle couche composite est également connu par ce document.

US 2019/275934 A1 décrit une pièce de garniture intérieure de véhicule automobile, comprenant un substrat rigide formant le corps de la dite pièce et une couche composite d'habillage recouvrant ledit substrat pour former au moins la face apparente de ladite pièce, ladite couche composite comprenant au moins une couche support, et une fine couche translucide, assemblée ou laminée avec la couche support, les couches élémentaires précitées qui forment ensemble par superposition la couche composite autorisant une transmission lumineuse à travers ladite couche composite, en particulier pour la réalisation d'images lumineuses par rétroéclairage, apparentes à la surface de la fine couche translucide. Le matériau du substrat est de nature à bloquer la diffusion et la transmission de la lumière, et ledit substrat présente des ouvertures traversantes formant des passages de lumière rectilignes, qui débouchent sur la fine couche translucide et dont les sections définissent les formes des éléments constitutifs de l'image lumineuse.

Les documents US 7 097 913, US2016/0121592, US2015/0343837 et GB 2 541 893 divulguent des réalisations plus ou moins similaires.

Toutefois, dans ces réalisations connues, le rétro-éclairage à travers plusieurs couches de matières plus ou moins transparentes ou translucides, éventuellement à travers des orifices ou des amincissements aménagés, occasionne des effets de diffraction du rayonnement lumineux, et un brouillage au niveau des bords ou limites. Les effets visuels générés sont donc généralement relativement ténus, avec des bords imprécis et brouillés, qui résultent en une délimitation de l'image affichée qui manque de netteté. Ainsi, ils ne permettent généralement pas l'affichage de signes, de pictogrammes ou de textes aisément reconnaissables ou lisibles. De plus, l'aspect visuel du matériau naturel n'est pas suffisamment mis en valeur, voire dégradé ou dénaturé, et elles n'autorisent aucune personnalisation du rendu.

La présente invention a notamment pour but de pallier au moins certains de ces inconvénients.
A cet effet, elle a pour objet une pièce de garniture intérieure de véhicule automobile, comprenant un substrat rigide formant le corps de la dite pièce et une couche composite d'habillage recouvrant ledit substrat pour former au moins la face apparente de ladite pièce, ladite couche composite comprenant au moins une couche support, et une fine couche translucide de matériau naturel organique ou minéral, assemblée ou laminée avec la couche support, la face apparente de ladite fine couche translucide étant elle-même recouverte d'une couche de primaire d'adhésion et d'une couche de vernis, formant la couche superficielle, les couches élémentaires précitées qui forment ensemble par superposition la couche composite autorisant une transmission lumineuse à travers ladite couche composite, en particulier pour la réalisation d'images lumineuses par rétroéclairage, apparentes à la surface de la couche de vernis, cette pièce de garniture étant caractérisée en ce que la couche support consiste en un film de qualité optique, en ce que le matériau du substrat est de nature à bloquer la diffusion et la transmission de la lumière, et en ce que ledit substrat présente des ouvertures traversantes formant des passages de lumière rectilignes, qui débouchent sur la couche support et dont les sections définissent les formes des éléments constitutifs de l'image lumineuse.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1] représente une vue en coupe schématique d'une partie d'une pièce de garniture intérieure selon l'invention ;
[Fig. 2] est une vue en perspective (à une autre échelle) de la pièce dont est issu l'objet de la figure 1, montrant l'affichage d'un groupe de lettres (SMRC), à titre d'image,
[Fig. 3A] est une vue en coupe de la couche composite d'habillage faisant partie de la pièce de garniture intérieure de la figure 1 ;
[Fig. 3B] est une vue en coupe du substrat faisant partie de la pièce de garniture de la figure 1 ;
[Fig. 4A] et
[Fig. 4B] sont des vues partielles en coupe illustrant des étapes de fabrication d'une pièce selon la figure 1, en accord avec un premier mode de réalisation de l'invention ;
[Fig. 5A],
[Fig. 5B],
[Fig. 5C],

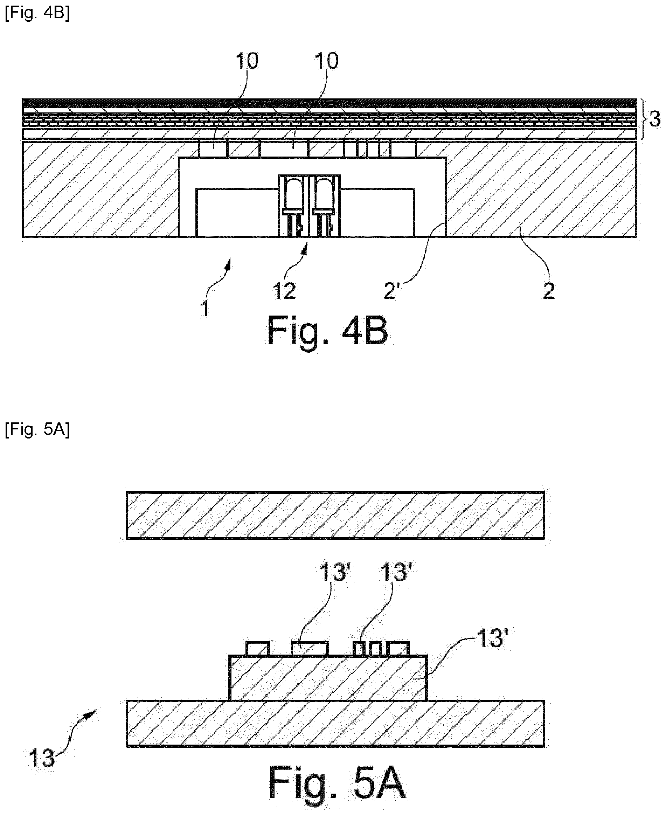

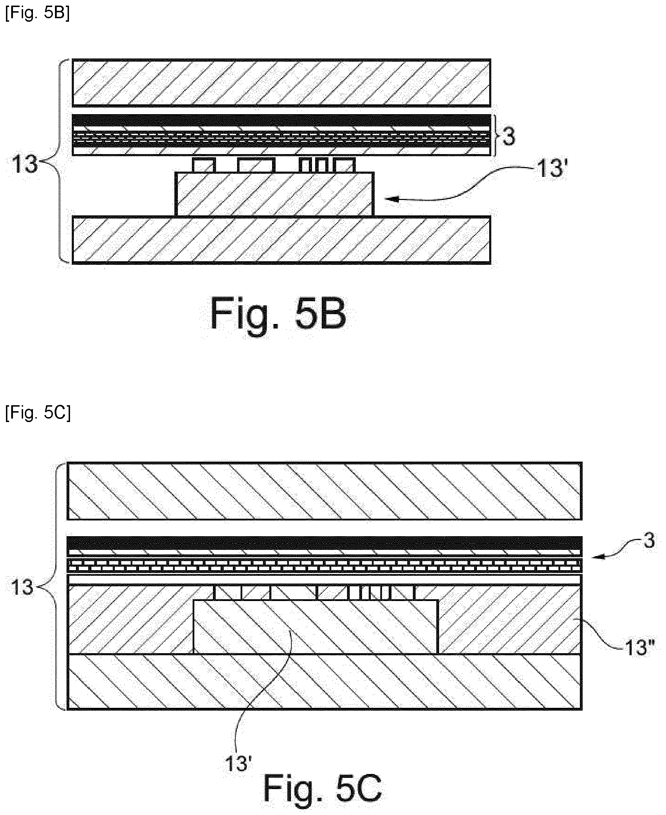

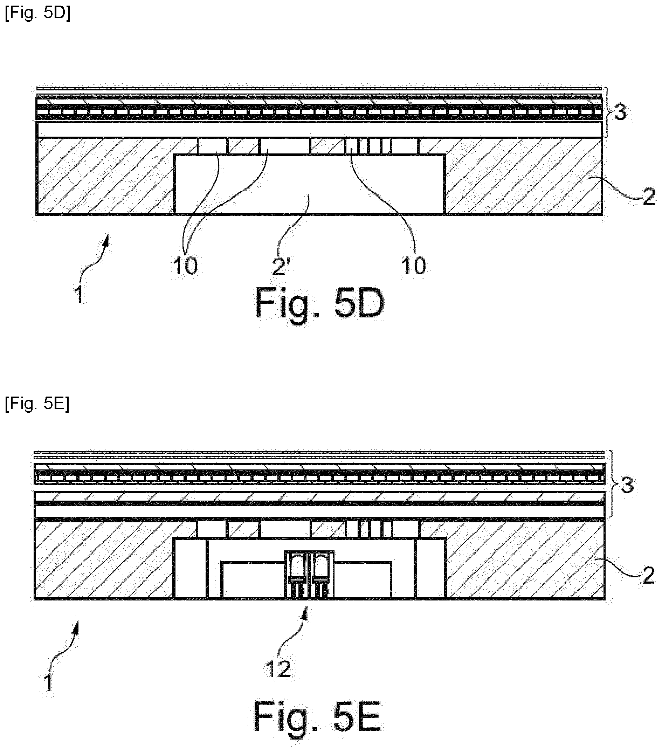

[Fig. 5D] et

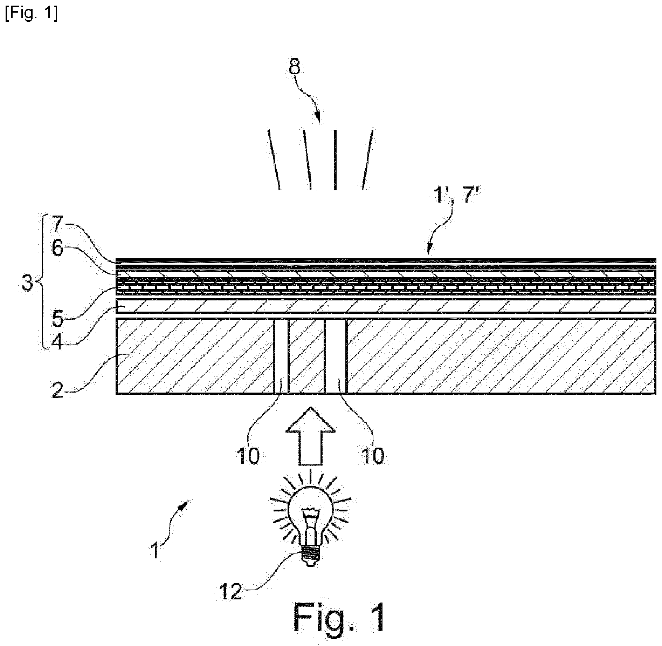

[Fig. 5E] sont des vues partielles en coupe illustrant des étapes de fabrication d'une pièce selon la figure 1, en accord avec un second mode de réalisation de l'invention.

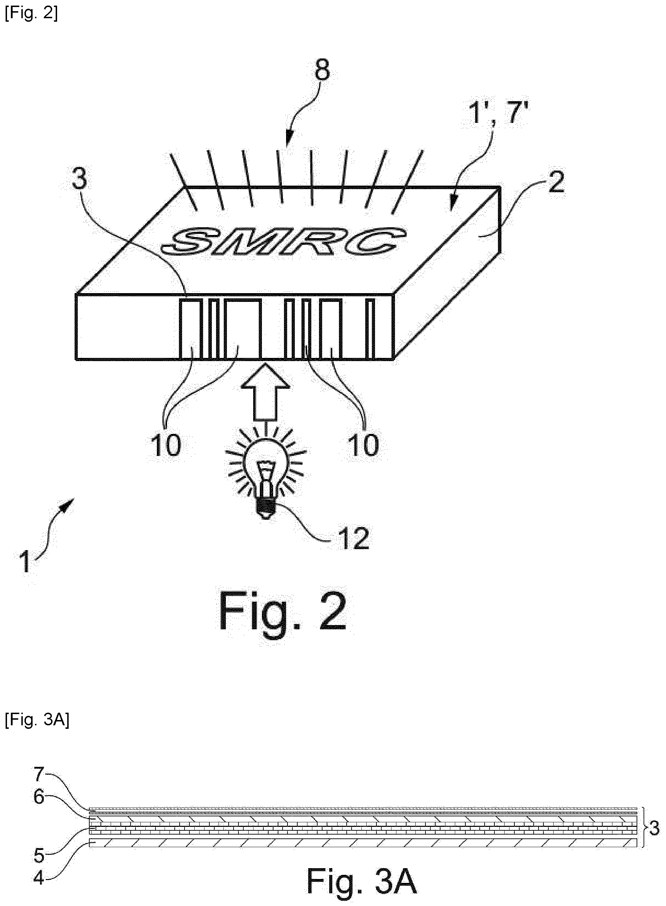

Les figures 1, 2, 4B et 5E illustrent schématiquement et au moins partiellement une pièce (1) de garniture intérieure de véhicule automobile, comprenant un substrat rigide (2) formant le corps de la dite pièce (1) et une couche composite d'habillage (3) recouvrant ledit substrat (2) pour former au moins la face apparente de ladite pièce (1). Cette couche composite (3) comprend au moins une couche support (4), et une fine couche translucide (5) de matériau naturel organique ou minéral, assemblée ou laminée avec la couche support (4), la face apparente (5') de ladite fine couche translucide (5) étant elle-même recouverte d'une couche (6) de primaire d'adhésion et d'une couche (7) de vernis, formant la couche superficielle. Les couches élémentaires (4, 5, 6, 7) précitées qui forment ensemble par superposition la couche composite (3) sont choisies et configurées pour autoriser une transmission lumineuse à travers ladite couche composite (3), en particulier pour la réalisation d'images lumineuses (8) par rétroéclairage, apparentes à la surface de la couche de vernis (7).

Conformément à l'invention, la couche support (4) consiste en un film de qualité optique, en ce que le matériau du substrat (2) est de nature à bloquer la diffusion et la transmission de la lumière, et ledit substrat (2) présente des ouvertures traversantes formant des passages de lumière (10) rectilignes, qui débouchent sur la couche support (4) et dont les sections définissent les formes des éléments constitutifs de l'image lumineuse (8).

Grâce à ces dispositions spécifiques, l'invention permet, d'une part, de transmettre une quantité de lumière suffisante jusqu'aux couches translucides (5 à 7) pour produire des images lumineuses (8) marquées, bien délimitées et de grande luminosité en surface de la pièce (1) et, d'autre part, de fournir des contours d'images nets et précis.

En effet, la prévision de passages de lumière (10) dans le substrat (2), associée aux choix spécifiques des matériaux constitutifs du substrat (2) et de la couche support (4), permet une transmission optimisée de la lumière depuis l'arrière du substrat (2) jusqu'à la fine couche de matériau naturel translucide (5), sans obstacle optique et sans perte par diffusion latérale dans les matériaux traversés. En outre, le contraste élevé en termes de luminosité et la précision de la délimitation des passages de lumière (10) entraine une définition nette du tracé des contours et bords des images lumineuses (8) s'affichant en surface sur la face apparente (1') de la pièce (1), au-dessus et dans le prolongement desdits passages, en cas de projection de lumière depuis la face arrière de la pièce (1). Pour des considérations de facilité de réalisation et d'efficacité, les passages de lumière (10) présentent préférentiellement une extension rectiligne et s'étendent préférentiellement selon une direction sensiblement perpendiculaire au plan de la face apparente (1') de la pièce (1), ou au plan tangent localement à cette face. De même, la lumière de rétroéclairage est avantageusement projetée dans lesdits passages selon cette direction.

La couche support (4) de qualité optique est sensiblement transparente et propice à réorienter la lumière en direction de la fine couche translucide (5) de matériau naturel, en empêchant la diffusion de la lumière latéralement (dans le plan de ladite couche) et le cas échéant en concentrant le rayonnement. De plus, du fait de la faible épaisseur de la couche support (4), sa présence ne dégrade pas la qualité de l'image lumineuse (8) produite par rapport à une projection sans couche (4).

A titre d'exemple, cette couche support (4) peut consister en un film de qualité optique, d'épaisseur entre 0.5 et 2mm, de préférence entre 0.7 et 1.5mm, réalisé en matière plastique, par exemple en Polycarbonate, ou en Polyester. Ce film (4) a préférentiellement des qualités d'uniformité et d'homogénéité lui conférant ses performances optiques ainsi qu'une transparence à la lumière qui est idéale dans une direction verticale.

En outre, ce film (4) aura avantageusement pour particularité de rediriger les rayons de lumière le traversant et de modifier leur angle d'incidence pour les faire tendre vers la verticale en sortie de traversée, ce grâce par exemple à des microparticules ou microéléments ou micro-volets, ou en variante grâce à des aspérité ou effet de grain sur sa surface ou des éléments physico-chimiques assurant cette réorientation. Ainsi, ce film (4) peut apparaitre parfaitement transparent dans une direction verticale (c'est-à-dire perpendiculaire à son plan d'extension), et son opacité parait augmenter quand l'observateur incline la tête d'un certain angle par rapport à la verticale au plan du film, et donc à la verticale de la surface locale de la pièce (principe des films de confidentialité sur les écrans des ordinateurs).

Le substrat (2) formant le corps support rigide de la pièce (1) est quant à lui réalisé, préférentiellement par moulage par injection, en une matière opaque, par exemple un polypropylène ou alors un mélange du type PC/ABS, de couleur sombre (noir, gris foncé).

Afin d'augmenter le cas échéant encore davantage la luminosité des images (8), ainsi que leur netteté et leur contraste, dans le cas d'exigences particulières de la part de l'utilisateur, il peut être prévu que la fine couche translucide (5) de matériau naturel présente, au droit des passages de lumière (10), des zones ayant subi une attaque surfacique au niveau de sa face d'envers, le cas échéant d'épaisseur de matière moindre, par exemple résultant d'une ablation localisée.

L'épaisseur de la couche (5) sera néanmoins toujours suffisante pour garantir l'effet « secret jusqu'à éclairement », au niveau de la face apparente (1') de la pièce (1), et aussi assurer localement une résistance structurelle suffisante. L'éventuelle ablation partielle et localisée de matière de la couche (5), en correspondance et coïncidence exactes avec la forme exacte de l'image (8) à afficher, pourra par exemple être réalisée par laser, avant sa solidarisation avec la couche support (4).

Selon une première variante de réalisation de l'invention, la fine couche translucide (5) est solidarisée surfaciquement avec la couche support (4) par l'intermédiaire d'une couche d'adhésion (11), et la couche support (4) est éventuellement solidarisée surfaciquement avec le substrat (2) par une autre couche d'adhésion (11'), cette couche (11) ou ces deux couches (11 et 11') d'adhésion étant sensiblement transparente(s) à la lumière, et préférentiellement de qualité optique.

Ainsi, ces couches de liaison ne font pas non plus obstacle à la transmission de lumière et ne donnent lieu à aucune perte par diffusion.

Selon une seconde variante de réalisation préférée de l'invention, la couche support (4) consiste en une bande adhésive double face de qualité optique, assurant elle-même sa solidarisation avec la couche (5) et le substrat (2).

En accord avec une évolution favorable de l'invention, optimisant le rendu lumineux, il peut être prévu que les passages de lumière (10) présentent des surfaces de parois (faces internes des passages) traitées et/ou revêtues, favorisant la réflexion de la lumière, et avantageusement sa propagation et éventuellement sa focalisation en direction du film de qualité optique (4) et de la fine couche translucide (5) de matière naturelle. Un tel traitement ou revêtement peut notamment être prévu sur les faces des parois des ouvertures traversantes formées ou découpées dans le substrat (2).

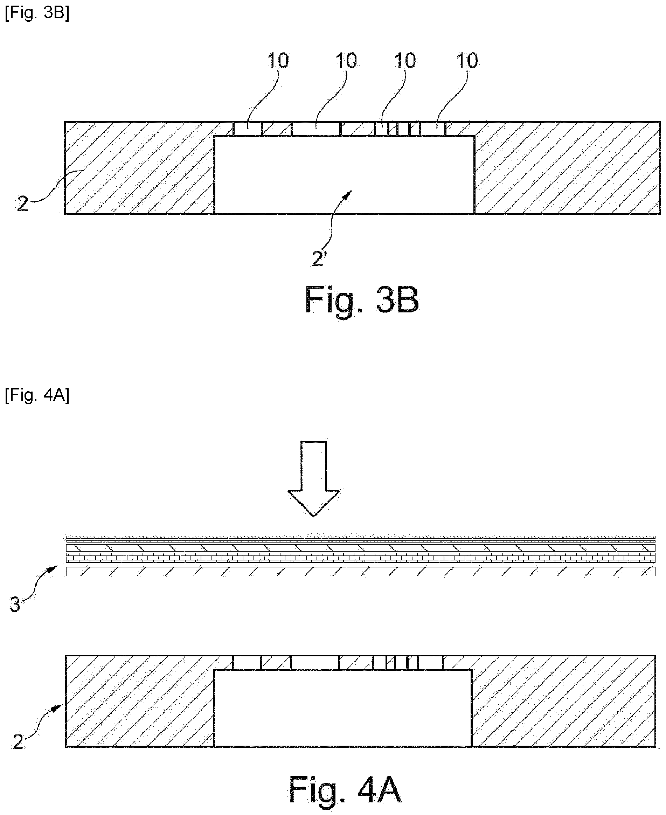

Préférentiellement, en vue de disposer d'une source lumineuse intégrée, et donc d'une pièce (1) formant module fonctionnel indépendant, et comme le montrent les figures 4B et 5E, la au moins une source de lumière (12) destinée à générer l'image lumineuse (8) par rétroéclairage est logée dans l'épaisseur du substrat (2) ou dans une cavité (2') formée dans ce dernier, ladite source (12) étant préférentiellement choisie parmi les lampes laser, les dispositifs à LED et les fibres optiques. Dans le cas de mise en oeuvre de fibres optiques, la source lumineuse elle-même pourra éventuellement être déportée.

En vue de personnaliser le rendu des effets lumineux, il peut être avantageusement prévu que la couche de primaire (6) et/ou la couche de vernis (7) intègre(nt) une teinture, des pigments ou une substance colorante analogue.

La teinture intégrée dans la couche de primaire (6) et/ou la couche de vernis (7), préférentiellement uniquement dans la couche de vernis transparent superficielle (7), peut présenter soit une coloration correspondant ou similaire à la teinte du matériau naturel de la couche translucide (5), soit une coloration différente de cette teinte, ce en fonction de l'effet souhaité et/ou au choix du client par exemple. Il est ainsi possible, au choix, visuellement soit de conserver la coloration et l'aspect naturel de la couche (5), soit d'imposer une coloration et un aspect différents.

Avantageusement, la couche de vernis (7) peut aussi présenter un aspect visuel et/ou une topographie de surface structurée (7'), préférentiellement imitant ou accentuant le motif du matériau naturel de la couche translucide (5) et résultant avantageusement d'un traitement spécifique subséquent, par exemple de type mécanique, tel que l'essuyage par exemple.

En réalisant un tel traitement mécanique, de type essuyage par exemple, il est possible de faire apparaitre d'éventuels motifs tels que des lignes, des noeuds, des strates ou des veines, qui s'apparentent aux caractéristiques visuelles de la matière naturelle de la couche (5).

En accord avec une réalisation pratique préférée, il peut être prévu que :
- la couche de vernis (7), transparente ou teintée translucide, présente une épaisseur comprise entre 30 µm et 80 µm, en particulier entre 40 µm et 60 µm et consiste par exemple en une laque PU solvantée, et/ou
- que la couche de primaire (6), transparente ou teintée translucide, présente une épaisseur comprise entre 5 µm et 20 µm, préférentiellement entre 10 µm et 15 µm, et consiste par exemple en un primaire d'adhésion translucide, lequel intègre éventuellement au moins un additif qui compense une perte d'une caractéristique visuelle ou tactile originelle ou ajoute une caractéristique visuelle ou tactile supplémentaire à la couche fine (5) en matériau naturel. Cette couche de primaire peut notamment être du type décrit dans le document FR 3 096 301.

De plus selon d'autres caractéristiques avantageuses de l'invention, il peut être prévu que le matériau naturel formant la fine couche continue translucide (5) soit choisi dans le groupe formé par la pierre, le verre, la céramique, le bois et un alliage d'une résine synthétique avec des éléments (par exemple inclusions du type particules, lamelles, ...) en un des matériaux naturels précités. Cette couche (5) présente avantageusement une épaisseur comprise entre 50 µm à 2 mm, préférentiellement entre 0,2 et 0,4 mm, en fonction notamment du type de matériau et de l'effet recherché en relation avec l'image lumineuse (8) projetée. En fonction d'éventuelles ablations localisées au droit des passages de lumière (10), cette couche (5) présentera une épaisseur plus ou moins importante en relation avec la zone de projection d'image (8) considérée.

L'épaisseur totale cumulée de matières traversées par la lumière (au niveau des couches translucides de surface : 5, 6 et 7) est avantageusement comprise entre 10 µm et 3 mm, préférentiellement entre 50 µm et 0,5 mm.

La couche de support (4) présente des performances mécaniques suffisantes pour maintenir la cohérence de la couche composite de décor (3) lors des sollicitations générées pendant l'opération de gainage (recouvrement d'un substrat par cette couche), et/ou provoquées par les utilisateurs dans le véhicule, pour éviter que cette couche (3) de décor ne se craquèle, ne se rompt, ou ne se distende.

La couche composite (3) décorant le substrat (2) peut, soit être préassemblée (par exemple assemblage par laminage-collage des couches 4 et 5, puis application des couches 6 et 7) pour être ensuite rapportée sur la surface du substrat (2) à habiller, soit être réalisée directement sur ledit substrat (2) par empilage successif des couches élémentaires (4 à 7) précitées. Dans le premier cas, la solidarisation peut se faire par collage (avec une colle 11' -par exemple une colle PUR base aqueuse-ou par l'intermédiaire de la seconde face collante de la couche support (4) sous forme de double face de qualité optique).

A la région de l'image lumineuse (8) peut être associé au moins une commande tactile, optique ou inductive, dont l'emplacement est indiqué sélectivement. Une couche ou un élément fonctionnel(le) du type capteur ou commande sensitive, de nature inductive, capacitive ou réagissant à la pression manuelle de l'utilisateur, est alors présent localement en étant intégré dans l'épaisseur de la couche composite (3).

On pourra aussi appliquer des encres, peintures (ou autre substances) translucides colorées en surface, au moins au niveau des zones d'affichage de l'image (8), et au droit des passages de lumière (10), pour créer des effets colorés, uniformes ou non, des dégradés ou analogues.

Il est aussi possible de mettre en oeuvre une technique d'impression telle que décrite dans le document EP 3 268 228 pour décorer ou colorer l'aspect du matériau naturel.

L'homme du métier comprend, à la lecture de ce qui précède, que l'invention offre un large panel de variabilité d'aspects.

Ainsi, avec par exemple seulement deux bases minérales (Mica et Ardoise) il est possible de « contretyper » une multitude d'essence de pierres différentes.

De ce fait, l'utilisateur peut adapter la couleur de l'aspect « pierre » apparent à sa guise.

L'invention concerne également des procédés de fabrication d'une pièce (1) de garniture intérieure de véhicule automobile comme décrite ci-dessus.

En accord avec un premier mode de réalisation, le procédé de fabrication d'une telle pièce (1) consiste à réaliser séparément, d'une part, une couche composite d'habillage (3) comprenant au moins une couche support (4) et une fine couche translucide (5) de matériau naturel organique ou minéral, et, d'autre part, un substrat (2) pourvu d'ouvertures traversantes formant de passages de lumière (10) rectilignes et d'une cavité (2') dans laquelle débouchent lesdits passages (10), puis à rapporter ladite couche composite (3) sur le substrat (2) de manière ajustée et concordante, par exemple par gainage ou thermogainage, le cas échéant après application d'une couche d'adhésion (1 1'), sur la couche support (4) et/ou sur le substrat (2), et, enfin, à intégrer la source de lumière (12) dans la cavité (2') dudit substrat (2).

Avantageusement, il peut être prévu de réaliser le substrat (2), avec les passages de lumière (10) et la cavité (2') intégrés, par moulage d'un seul tenant.

En accord avec un second mode de réalisation de l'invention, le procédé de fabrication d'une pièce (1) de garniture intérieure telle que décrite précédemment, consiste à réaliser a couche composite d'habillage (3) comprenant au moins une couche support (4) et une fine couche translucide (5) de matériau naturel organique ou minéral, puis à disposer ladite couche composite d'habillage (3) dans un moule d'injection (13) comprenant des éléments de réserve (13') correspondant aux volumes de passages de lumière (10) et d'une cavité (2') dans le substrat (2), à injecter la matière (13") destinée à former ledit substrat (2), ce en contact direct avec la couche support (4) de manière à surmouler ledit film composite d'habillage (3), et enfin à intégrer la source de lumière (12) dans la cavité (2') dudit substrat (2).

Dans ce second mode de réalisation, la matière de la couche support (4) ou au moins la couche de surface de sa face d'envers permet une bonne cohésion ou une bonne adhésion avec la matière du substrat (2) qui est surmoulée sur elle.

On peut relever que l'invention peut influer, pour atteindre le but fixé, et en fonction du niveau de résultat recherché, sur un ou plusieurs des paramètres suivants :
- le contraste, en optimisant la concentration à un endroit donné et en réduisant la dégradation liée à la transmission, en limitant les fuites et pertes de lumière vers des endroits non concernés ;
- l'épaisseur de matière opaque à traverser, présent entre la source de lumière et la surface/face apparente (1') sur laquelle l'image lumineuse (8) rétroéclairée doit apparaître ;
- la qualité optique des différentes couches à traverser par la lumière (notamment 4, 6, 7) ;
- la qualité du rayonnement lumineux émis par la source : puissance, nature, focalisation, directivité, orientation.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention. 1

## Revendications

1. Pièce (1) de garniture intérieure de véhicule automobile, comprenant un substrat rigide (2) formant le corps de la dite pièce (1) et une couche composite d'habillage (3) recouvrant ledit substrat (2) pour former au moins la face apparente de ladite pièce (1), ladite couche composite (3) comprenant au moins une couche support (4), et une fine couche translucide (5) de matériau naturel organique ou minéral, assemblée ou laminée avec la couche support (4), la face apparente (5') de ladite fine couche translucide (5) étant elle-même recouverte d'une couche (6) de primaire d'adhésion et d'une couche (7) de vernis, formant la couche superficielle, les couches élémentaires (4, 5, 6, 7) précitées qui forment ensemble par superposition la couche composite (3) autorisant une transmission lumineuse à travers ladite couche composite (3), en particulier pour la réalisation d'images lumineuses (8) par rétroéclairage, apparentes à la surface de la couche de vernis (7),
pièce de garniture (1) **caractérisée en ce que** la couche support (4) consiste en un film de qualité optique, **en ce que** le matériau du substrat (2) est de nature à bloquer la diffusion et la transmission de la lumière, et **en ce que** ledit substrat (2) présente des ouvertures traversantes formant des passages de lumière (10) rectilignes, qui débouchent sur la couche support (4) et dont les sections définissent les formes des éléments constitutifs de l'image lumineuse (8).

2. Pièce (1) de garniture intérieure de véhicule automobile selon la revendication 1, **caractérisée en ce que** la fine couche translucide (5) de matériau naturel présente, au droit des passages de lumière (10), des zones ayant subi une attaque surfacique au niveau de sa face d'envers, le cas échéant d'épaisseur de matière moindre, par exemple résultant d'une ablation localisée.

3. Pièce (1) de garniture intérieure de véhicule automobile selon la revendication 1 ou 2, **caractérisée en ce que** la fine couche translucide (5) est solidarisée surfaciquement avec la couche support (4) par l'intermédiaire d'une couche d'adhésion (11), et **en ce que** la couche support (4) est éventuellement solidarisée surfaciquement avec le substrat (2) par une autre couche d'adhésion (11'), cette couche (11) ou ces deux couches (11 et 11') d'adhésion étant sensiblement transparente(s) à la lumière, et préférentiellement de qualité optique.

4. Pièce (1) de garniture intérieure de véhicule automobile selon la revendication 1 ou 2, **caractérisée en ce que** la couche support (4) consiste en une bande adhésive double face de qualité optique.

5. Pièce (1) de garniture intérieure de véhicule automobile selon l'une quelconque des revendications 1 à 4, **caractérisée en ce que** les passages de lumière (10) présentent des surfaces de parois traitées et/ou revêtues, favorisant la réflexion de la lumière, et avantageusement sa propagation et éventuellement sa focalisation en direction du film de qualité optique (4) et de la fine couche translucide (5) de matière naturelle.

6. Pièce (1) de garniture intérieure de véhicule automobile selon l'une quelconque des revendications 1 à 5, **caractérisée en ce que** la au moins une source de lumière (12) destinée à générer l'image lumineuse (8) par rétroéclairage est logée dans l'épaisseur du substrat (2) ou dans une cavité (2') formée dans ce dernier, ladite source (12) étant préférentiellement choisie parmi les lampes laser, les dispositifs à LED et les fibres optiques.

7. Pièce (1) de garniture intérieure de véhicule automobile selon l'une quelconque des revendications 1 à 6, **caractérisée en ce que en ce que** la couche de primaire (6) et/ou la couche de vernis (7) intègre(nt) une teinture, des pigments ou une substance colorante analogue, la teinture intégrée dans la couche de primaire (6) et/ou la couche de vernis (7), préférentiellement uniquement dans la couche de vernis transparent superficielle (7), présentant avantageusement une coloration similaire ou différente de la teinte du matériau naturel de la couche translucide (5), en fonction de l'effet souhaité.

8. Pièce (1) de garniture intérieure de véhicule automobile selon l'une quelconque des revendications 1 à 7, **caractérisée en ce que** la couche de vernis (7) présente un aspect visuel et/ou une topographie de surface structurée (7'), préférentiellement imitant ou accentuant le motif du matériau naturel de la couche translucide (5) et résultant avantageusement d'un traitement spécifique subséquent, par exemple de type mécanique, tel que l'essuyage.

9. Procédé de fabrication d'une pièce (1) de garniture intérieure de véhicule automobile, selon l'une quelconque des revendications 1 à 8, **caractérisé en ce qu'**il consiste à réaliser séparément, d'une part, une couche composite d'habillage (3) comprenant au moins une couche support (4) et une fine couche translucide (5) de matériau naturel organique ou minéral, et, d'autre part, un substrat (2) pourvu d'ouvertures traversantes formant de passages de lumière (10) rectilignes et d'une cavité (2') dans laquelle débouchent lesdits passages (10), puis à rapporter ladite couche composite (3) sur le substrat (2) de manière ajustée et concordante, par exemple par gainage ou thermogainage, le cas échéant après application d'une couche d'adhésion (11'), sur la couche support (4) et/ou sur le substrat (2), et, enfin, à intégrer la source de lumière (12) dans la cavité (2') dudit substrat (2).

10. Procédé selon la revendication 9, **caractérisé en ce qu'**il consiste à réaliser le substrat (2), avec les passages de lumière (10) et la cavité (2') intégrés, par moulage d'un seul tenant.

11. Procédé de fabrication d'une pièce (1) de garniture intérieure de véhicule automobile, selon l'une quelconque des revendications 1 à 8, avec une couche composite d'habillage (3) et un substrat (2), **caractérisé en ce qu'**il consiste à réaliser a couche composite d'habillage (3) comprenant au moins une couche support (4) et une fine couche translucide (5) de matériau naturel organique ou minéral, puis à disposer ladite couche composite d'habillage (3) dans un moule d'injection (13) comprenant des éléments de réserve (13') correspondant aux volumes de passages de lumière (10) et d'une cavité (2') dans le substrat (2), à injecter la matière (13") destinée à former ledit substrat (2), ce en contact direct avec la couche support (4) de manière à surmouler ledit film composite d'habillage (3), et enfin à intégrer la source de lumière (12) dans la cavité (2') dudit substrat (2). 1

## Patentansprüche

1. Innenverkleidungsteil (1) für ein Kraftfahrzeug, umfassend ein starres Substrat (2), das den Körper des Teils (1) bildet, und eine Verkleidungsverbundschicht (3), die das Substrat (2) bedeckt, um wenigstens die Sichtseite des Teils (1) zu bilden, wobei die Verbundschicht (3) wenigstens eine Trägerschicht (4) und eine dünne durchscheinende Schicht (5) aus organischem oder mineralischem natürlichen Material umfasst, die mit der Trägerschicht (4) zusammengefügt oder laminiert ist, wobei die Sichtseite (5') der dünnen durchscheinenden Schicht (5) ihrerseits von einer Haftprimerschicht (6) und einer Lackschicht (7) bedeckt ist, die die Oberflächenschicht bildet, wobei die vorgenannten Elementarschichten (4, 5, 6, 7), die zusammen durch Überlagerung die Verbundschicht (3) bilden, eine Lichtübertragung durch die Verbundschicht (3) ermöglichen, insbesondere für die Erzeugung von Lichtbildern (8) durch Hinterleuchtung, die auf der Oberfläche der Lackschicht (7) sichtbar sind, wobei das Verkleidungsteil (1) **dadurch gekennzeichnet ist, dass** die Trägerschicht (4) aus einem Film von optischer Qualität besteht, und dadurch, dass das Material des Substrats (2) so beschaffen ist, dass es die Streuung und die Übertragung des Lichts blockiert, und dadurch, dass das Substrat (2) durchgehende Öffnungen aufweist, die geradlinige Lichtdurchgänge (10) bilden, die auf der Trägerschicht (4) münden und deren Teilstücke die Formen der Elemente definieren, die das Lichtbild (8) bilden.

2. Innenverkleidungsteil (1) für ein Kraftfahrzeug nach Anspruch 1, **dadurch gekennzeichnet, dass** die dünne durchscheinende Schicht (5) aus natürlichem Material an den Lichtdurchgängen (10) Bereiche aufweist, die an ihrer Rückseite eine Oberflächenbearbeitung erfahren haben, gegebenenfalls mit einer geringeren Materialdicke, die zum Beispiel aus einer lokalen Abtragung resultiert.

3. Innenverkleidungsteil (1) für ein Kraftfahrzeug nach Anspruch 1 oder 2, **dadurch gekennzeichnet, dass** die dünne durchscheinende Schicht (5) oberflächlich mittels einer Haftschicht (11) fest mit der Trägerschicht (4) verbunden ist, und dadurch, dass die Trägerschicht (4) eventuell oberflächlich durch eine andere Haftschicht (11') fest mit dem Substrat (2) verbunden ist, wobei diese Haftschicht (11) oder diese zwei Haftschichten (11 und 11') im Wesentlichen lichtdurchlässig und vorzugsweise von optischer Qualität sind.

4. Innenverkleidungsteil (1) für ein Kraftfahrzeug nach Anspruch 1 oder 2, **dadurch gekennzeichnet, dass** die Trägerschicht (4) aus einem doppelseitigen Klebeband von optischer Qualität besteht.

5. Innenverkleidungsteil (1) für ein Kraftfahrzeug nach einem der Ansprüche 1 bis 4, **dadurch gekennzeichnet, dass** die Lichtdurchgänge (10) behandelte und/oder beschichtete Wandflächen aufweisen, die die Reflexion des Lichts und vorteilhafterweise dessen Ausbreitung und eventuell Fokussierung in Richtung des Films von optischer Qualität (4) und der dünnen durchscheinenden Schicht (5) aus natürlichem Material begünstigen.

6. Innenverkleidungsteil (1) für ein Kraftfahrzeug nach einem der Ansprüche 1 bis 5, **dadurch gekennzeichnet, dass** die wenigstens eine Lichtquelle (12) zur Erzeugung des Lichtbilds (8) durch Hinterleuchtung in der Dicke des Substrats (2) oder in einem Hohlraum (2'), der in diesem gebildet ist, untergebracht ist, wobei die Quelle (12) vorzugsweise aus Laserlampen, LED-Vorrichtungen und optischen Fasern gewählt ist.

7. Innenverkleidungsteil (1) für ein Kraftfahrzeug nach einem der Ansprüche 1 bis 6, **dadurch gekennzeichnet, dass** die Primerschicht (6) und/oder die Lackschicht (7) eine Einfärbung, Pigmente oder einen analogen Farbstoff enthält bzw. enthalten, wobei die Einfärbung, die in die Primerschicht (6) und/oder die Lackschicht (7), vorzugsweise nur in die oberflächliche Klarlackschicht (7) integriert ist, vorzugsweise eine Färbung aufweist, die dem Farbton des natürlichen Materials der durchscheinenden Schicht (5) ähnlich oder davon verschieden ist, je nach der gewünschten Wirkung.

8. Innenverkleidungsteil (1) für ein Kraftfahrzeug nach einem der Ansprüche 1 bis 7, **dadurch gekennzeichnet, dass** die Lackschicht (7) ein Erscheinungsbild und/oder eine strukturierte Oberflächentopographie (7') aufweist, die vorzugsweise das Muster des natürlichen Materials der durchscheinenden Schicht (5) nachahmt oder betont und vorteilhafterweise aus einer spezifischen nachfolgenden Behandlung, zum Beispiel einer mechanischen wie etwa Wischen, resultiert.

9. Verfahren zur Herstellung eines Innenverkleidungsteils (1) für ein Kraftfahrzeug nach einem der Ansprüche 1 bis 8, **dadurch gekennzeichnet, dass** es darin besteht, separat einerseits eine Verbundverkleidungsschicht (3), die wenigstens eine Trägerschicht (4) und eine dünne durchscheinende Schicht (5) aus organischem oder mineralischem natürlichen Material umfasst, und andererseits ein Substrat (2) herzustellen, das mit durchgehenden Öffnungen, die geradlinige Lichtdurchgänge (10) bilden, und einem Hohlraum (2') versehen ist, in dem die Durchgänge (10) münden, dann die Verbundschicht (3) passend und übereinstimmend auf das Substrat (2) aufzubringen, zum Beispiel durch Kaschieren oder Thermokaschieren, gegebenenfalls nach Auftragung einer Haftschicht (11'), auf die Trägerschicht (4) und/oder das Substrat (2), und schließlich die Lichtquelle (12) in den Hohlraum (2') des Substrats (2) zu integrieren.

10. Verfahren nach Anspruch 9, **dadurch gekennzeichnet, dass** es darin besteht, das Substrat (2) durch einstückiges Formen herzustellen, wobei die Lichtdurchgänge (10) und der Hohlraum (2') integriert sind.

11. Verfahren zur Herstellung eines Innenverkleidungsteils (1) für ein Kraftfahrzeug nach einem der Ansprüche 1 bis 8 mit einer Verbundverkleidungsschicht (3) und einem Substrat (2), **dadurch gekennzeichnet, dass** es darin besteht, eine Verbundverkleidungsschicht (3) herzustellen, die wenigstens eine Trägerschicht (4) und eine dünne durchscheinende Schicht (5) aus organischem oder mineralischem natürlichen Material umfasst, dann die Verbundverkleidungsschicht (3) in einer Spritzgussform (13) anzuordnen, die Reserveelemente (13') umfasst, die den Volumen von Lichtdurchgängen (10) und eines Hohlraums (2') im Substrat (2) entsprechen, das Material (13") zur Bildung des Substrats (2) einzuspritzen, dies in direktem Kontakt mit der Trägerschicht (4), um den Verbundverkleidungsfilm (3) zu überformen, und schließlich die Lichtquelle (12) in den Hohlraum (2') des Substrats (2) zu integrieren.

## Claims

1. Motor vehicle inner trim component (1) comprising a rigid substrate (2) forming the body of said component (1) and a composite cladding layer (3) covering said substrate (2) so as to form at least the visible face of said component (1), said composite layer (3) comprising at least a support layer (4), and a thin translucent layer (5) of organic or inorganic natural material, assembled or laminated with the support layer (4), the visible face (5') of said thin translucent layer (5) itself being covered by a layer (6) of adhesion primer and a layer (7) of varnish, forming the surface layer, the elementary layers (4, 5, 6, 7) mentioned above that together form the composite layer (3) by superposition allowing light transmission through said composite layer (3), in particular for the production of light images (8) by backlighting, which are visible on the surface of the varnish layer (7),
which trim component (1) is **characterized in that** the support layer (4) consists of a film of optical quality, **in that** the material of the substrate (2) is liable to block the diffusion and transmission of the light, and **in that** said substrate (2) has through-openings forming rectilinear light passages (10), which open onto the support layer (4) and of which the sections define the shapes of the constituent elements of the light image (8) .

2. Motor vehicle inner trim component (1) according to Claim 1, **characterized in that** the thin translucent layer (5) of natural material has, in line with the light passages (10), zones that have undergone a surface attack on its reverse face, if appropriate with a smaller thickness of material, for example resulting from localised ablation.

3. Motor vehicle inner trim component (1) according to Claim 1 or 2, **characterized in that** the thin translucent layer (5) is secured at its surface to the support layer (4) via an adhesion layer (11), and **in that** the support layer (4) is optionally secured at its surface to the substrate (2) by another adhesion layer (11'), this adhesion layer (11) or these two adhesion layers (11 and 11') being substantially transparent to the light, and preferentially of optical quality.

4. Motor vehicle inner trim component (1) according to Claim 1 or 2, **characterized in that** the support layer (4) consists of a double-sided adhesive tape of optical quality.

5. Motor vehicle inner trim component (1) according to any one of Claims 1 to 4, **characterized in that** the light passages (10) have treated and/or coated wall surfaces, promoting the reflection of the light, and advantageously its propagation and optionally its focusing in the direction of the film of optical quality (4) and the thin translucent layer (5) of natural material.

6. Motor vehicle inner trim component (1) according to any one of Claims 1 to 5, **characterized in that** the at least one light source (12) intended to generate the light image (8) by backlighting is housed in the thickness of the substrate (2) or in a cavity (2') formed in the latter, said source (12) preferentially being chosen from among laser lamps, LED devices and optical fibres.

7. Motor vehicle inner trim component (1) according to any one of Claims 1 to 6, **characterized in that** the primer layer (6) and/or the varnish layer (7) incorporate(s) a dye, pigments or a similar colouring substance, the dye incorporated in the primer layer (6) and/or the varnish layer (7), preferably only in the surface transparent varnish layer (7), advantageously having a colouring similar or different to the hue of the natural material of the translucent layer (5), as a function of the desired effect.

8. Motor vehicle inner trim component (1) according to any one of Claims 1 to 7, **characterized in that** the varnish layer (7) has a visual appearance and/or a topography of structured surface (7'), preferentially imitating or accentuating the pattern of the natural material of the translucent layer (5) and advantageously resulting from a subsequent specific treatment, for example of the mechanical type, such as wiping.

9. Method for manufacturing a motor vehicle inner trim component (1), according to any one of Claims 1 to 8, **characterized in that** it consists in separately producing, on the one hand, a composite cladding layer (3) comprising at least a support layer (4) and a thin translucent layer (5) of organic or inorganic natural material, and, on the other hand, a substrate (2) provided with through-openings forming rectilinear light passages (10) and with a cavity (2') into which said passages (10) open, then in attaching said composite layer (3) to the substrate (2) with a tight fit and so as to match, for example by sheathing or thermo sheathing, if appropriate after application of an adhesion layer (11'), to the support layer (4) and/or to the substrate (2), and, finally, in integrating the light source (12) in the cavity (2') of said substrate (2).

10. Method according to Claim 9, **characterized in that** it consists in producing the substrate (2), with the light passages (10) and the cavity (2') integrated, by moulding in one piece.

11. Method for manufacturing a motor vehicle inner trim component (1), according to any one of Claims 1 to 8, with a composite cladding layer (3) and a substrate (2), **characterized in that** it consists in producing the composite cladding layer (3) comprising at least a support layer (4) and a thin translucent layer (5) of organic or inorganic natural material, then in disposing said composite cladding layer (3) in an injection mould (13) comprising reserve elements (13') corresponding to the volumes of light passages (10) and of a cavity (2') in the substrate (2), in injecting the material (13") intended to form said substrate (2), this being in direct contact with the support layer (4) so as to overmould said composite cladding film (3), and finally in integrating the light source (12) in the cavity (2') of said substrate (2).
